# EUROPEAN PATENT APPLICATION

(11) **EP 4 342 293 A1**
(43) Date of publication of application: **27.03.2024**
(21) Application number: 22833575.8
(22) Date of filing: 28.06.2022
(51) Int. Cl.: A01K 7/02, B01D 35/02, B01D 35/30, B01D 35/26, H02K 7/14, H02K 29/00

(54) **WATER PURIFIER FOR PETS**

(30) Priority: 29.06.2021 KR 20210084697
(71) Applicant: PurrSong, Inc., Daejeon 34138 (KR)
(72) Inventor: NOH, Tae Gu, Suwon-si Gyeonggi-do 16422 (KR)
(74) Representative: BCKIP Part mbB
(86) International application number: PCT/KR2022/009218
(87) International publication number: WO 2023/277519

(57) **Abstract**

A water purifier includes, a casing including a water intake port; and a filtering unit disposed inside the casing, wherein the filtering unit includes, a rotor including blades configured to guide fluid and rotatably disposed in a storage space in which raw water is accommodated inside the casing; a filter unit communicating with the storage space and configured to purify fluid supplied from the rotor and discharge the fluid toward the water intake port; and a stator disposed in a control space isolated from the storage space inside the casing and configured to transmit electromagnetic force to the rotor and rotate the rotor.

## Description

### TECHNICAL FIELD

The present disclosure relates to a water purifier for pets.

### BACKGROUND

Water purifiers are designed to purify water by removing impurities from water by physical and chemical methods. A water purifier needs to have a high-performance filter and to be designed to keep the inside of the water purifier clean.

A water purifier for pets serves to provide drinking water for pets. Pets have been regarded as a part of the family and various specialized products for pets have been designed. The water purifier for pets can provide clean water to pets even when the owner is away.

The water purifier for pets needs to be equipped with a high-performance filter and to be designed to keep the inside of the water purifier clean and facilitate follow-up management. In this regard, Korean Patent No. 2057934 discloses an animal water purifier using wireless power. The animal water purifier disclosed in this publication includes a water purification container, a water purification module built into the water purification container, and a bowl for supplying water. Further, the water purification module is configured as a single module in which a water purification filter and a pump driving unit are combined.

Meanwhile, in the above-described animal water purifier of Korean Patent No. 2057934, a wireless power receiver, a controller, and a motor integrated with a pump are configured as a single module and then coupled to the water purification filter. The water purification filter coupled to a control module is built in the water purification module. Since the water purification module into which the water purification filter and the control module are built is mounted in a water accommodation space, the control module is also mounted in the water accommodation space.

Since the control module, which is built in the water purification module, is mounted in the water accommodation space, it is not directly exposed to water. However, since the control module is held together in the water accommodation space, there is a possibility of being exposed to water. Therefore, the animal water purifier according to the prior art has a problem in that the control module may be degraded in performance when used for a long time. For example, if the control module is exposed to the water accommodation space for a long time, water may flow into the control module and may affect the performance of a built-in driving unit or the like.

### DISCLOSURE OF THE INVENTION

### PROBLEMS TO BE SOLVED BY THE INVENTION

The present disclosure is to solve the above problems and to provide a water purifier in which a storage space for accommodating water is divided from a control space in which a controller is disposed.

Further, the present disclosure is to provide a water purifier that is easy to clean to keep the inside clean for a long time and facilitates follow-up management.

However, the problems to be solved by the present disclosure are not limited to the above-described problems. There may be other problems to be solved by the present disclosure.

### MEANS FOR SOLVING THE PROBLEMS

As a means for achieving the above-described technical problems, an embodiment of the present disclosure provides a water purifier, including, a casing including a water intake port; and a filtering unit disposed inside the casing, wherein the filtering unit includes, a rotor including blades configured to guide fluid and rotatably disposed in a storage space in which raw water is accommodated inside the casing; a filter unit communicating with the storage space and configured to purify fluid supplied from the rotor and discharge the fluid toward the water intake port; and a stator disposed in a control space isolated from the storage space inside the casing and configured to transmit electromagnetic force to the rotor and rotate the rotor.

Another embodiment of the present disclosure provides a driving unit for a water purifier disposed inside the water purifier and configured to form the flow of fluid supplied to a filter unit that purifies and discharges fluid, including, a rotor including blades configured to guide fluid and rotatably disposed in a storage space in which the fluid flows inside the water purifier; and a stator disposed in a control space isolated from the storage space inside the water purifier and configured to transmit electromagnetic force to the rotor and rotate the rotor.

The above-described technical solutions are provided by way of illustration only and should not be construed as liming the present disclosure. Besides the above-described embodiments, there may be additional embodiments described in the accompanying drawings and the detailed description.

### EFFECTS OF THE INVENTION

According to any one of the above-described means for solving the problems of the present disclosure, it is possible to provide a water purifier in which a storage space for accommodating and purifying water is divided from a control space for driving the storage space. Thus, the water purifier can maintain the performance of a controller even when used for a long time.

Also, it is possible to provide a water purifier in which respective spaces divided according to functions can be cleaned individually and components disposed according to the frequency or cycle of management can be disassembled conveniently. Thus, the water purifier facilitates follow-up management and can be kept clean for a long time.

### BRIEF DESCRIPTION OF THE DRAWINGS

**FIG. 1** is a perspective view of a water purifier according to an embodiment of the present disclosure.
**FIG. 2** is a longitudinal cross-sectional view of the water purifier shown in **FIG. 1****.**
**FIG. 3** is an enlarged view of an area A shown in **FIG. 2****.**
**FIG. 4** is an exploded perspective view illustrating a partition wall and a part of a filtering unit of the water purifier according to an embodiment of the present disclosure.
**FIG. 5A** illustrates a rotor according to an embodiment of the present disclosure.
**FIG. 5B** illustrates a stator according to an embodiment of the present disclosure.
**FIG. 6** is a perspective view illustrating a frame of the water purifier according to an embodiment of the present disclosure.
**FIG. 7** is provided to explain the flow of fluid inside the water purifier according to an embodiment of the present disclosure.

### BEST MODE FOR CARRYING OUT THE INVENTION

Hereinafter, embodiments of the present disclosure will be described in detail with reference to the accompanying drawings to be readily implemented by a person with ordinary skill in the art to which the present invention belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, the term "connected to" or "coupled to" that is used to designate a connection or coupling of one element to another element includes both a case that an element is "directly connected or coupled to" another element and a case that an element is "electronically connected or coupled to" another element via still another element. Further, it is to be understood that the term "comprises or includes" and/or "comprising or including" used in the document means that one or more other components, steps, operation and/or existence or addition of elements are not excluded in addition to the described components, steps, operation and/or elements unless context dictates otherwise and is not intended to preclude the possibility that one or more other features, numbers, steps, operations, components, parts, or combinations thereof may exist or may be added.

Hereinafter, embodiments of the present disclosure will be described in detail with reference to the accompanying drawings.

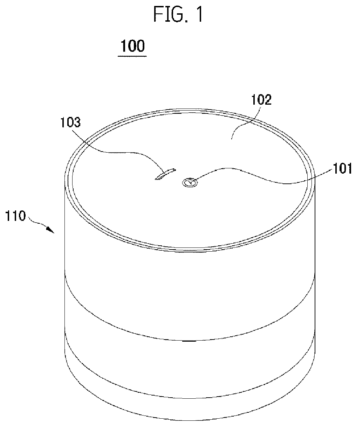

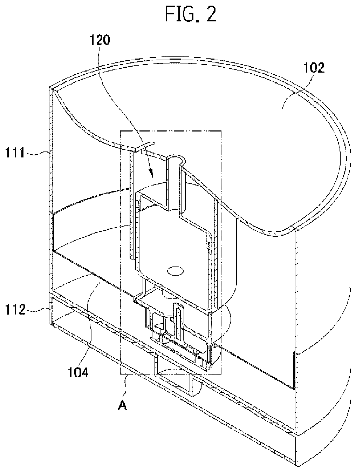

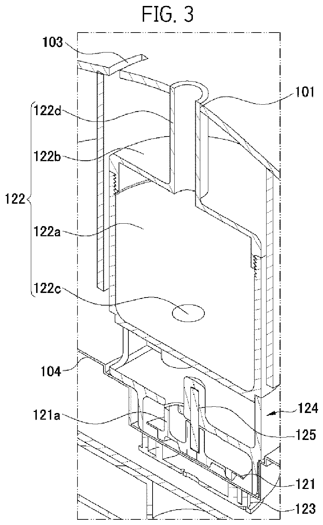

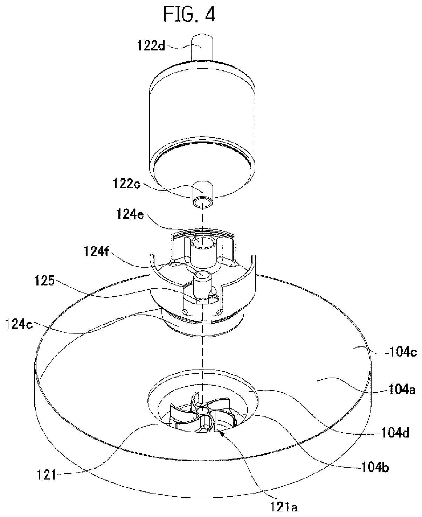

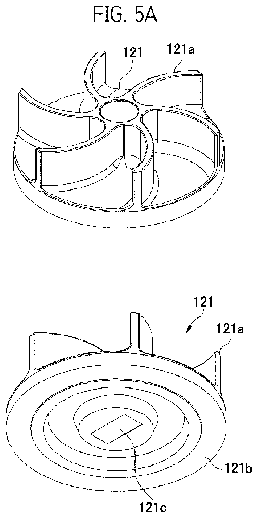

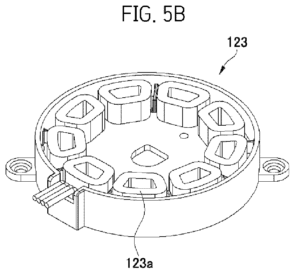

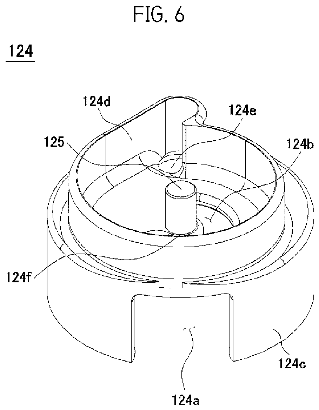

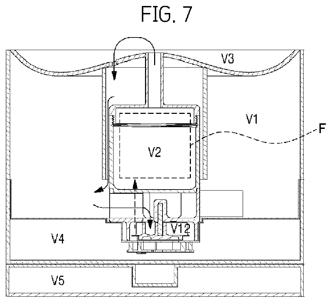

**FIG. 1** is a perspective view of a water purifier according to an embodiment of the present disclosure, and **FIG. 2** is a longitudinal cross-sectional view of the water purifier shown in **FIG. 1****.** **FIG. 3** is an enlarged view of an area A shown in **FIG. 2****,** and **FIG. 4** is an exploded perspective view illustrating a partition wall and a part of a filtering unit of the water purifier according to an embodiment of the present disclosure. **FIG. 5A** illustrates a rotor according to an embodiment of the present disclosure, and **FIG. 5B** illustrates a stator according to an embodiment of the present disclosure. **FIG. 6** is a perspective view illustrating a frame of the water purifier according to an embodiment of the present disclosure, and **FIG. 7** is provided to explain the flow of fluid inside the water purifier according to an embodiment of the present disclosure.

In a water purifier 100 according to an embodiment of the present disclosure, a storage space for accommodating and purifying water is divided from a control space for providing and controlling power for driving fluid in the storage space. Thus, the performance of a controller can be maintained and anxiety about water quality can be eliminated even when the water purifier 100 is used for a long time.

Also, the water purifier 100 can be easily disassembled and assembled so that respective spaces divided according to functions can be cleaned and managed individually. Thus, the water purifier 100 facilitates follow-up management and can be kept clean for a long time.

Referring to **FIG. 1** and **FIG. 2****,** the water purifier 100 according to an embodiment of the present disclosure may include a casing 110 and a filtering unit 120 disposed inside the casing 110. The casing 110 may include a water intake port 101. Further, referring to **FIG. 3****,** the filtering unit 120 may include a rotor 121, a filter unit 122, and a stator 123.

The casing 110 may be designed in a cylindrical shape as shown in **FIG. 1****.** The casing 110 can be implemented in many different forms and is not limited to the embodiments described herein. The casing 110 may accommodate therein the filtering unit 120 for purifying fluid.

Referring to **FIG. 1****,** the casing 110 according to an embodiment of the present disclosure may further include a water intake container 102 and a water recovery port 103. For example, the water intake container 102 may include a concave accommodation space at an upper portion to accommodate a predetermined amount of fluid. The water intake container 102 may be coupled to an upper portion of a raw water case 111 and may accommodate the fluid discharged from the filtering unit 120 while exposing the fluid upwards. For example, when the fluid purified through the filtering unit 120 is discharged to the outside through the water intake port 101, the water intake container 102 may accommodate a predetermined amount of the discharged fluid.

The water intake container 102 capable of accommodating a predetermined amount of fluid may move some of the fluid discharged from the water intake port 101 back to the storage space through the water recovery port 103. The water recovery port 103 may be formed through the water intake container 102 so that the fluid in a water intake space can be dropped into and collected in the storage space. For example, the purified water dropped from the water recovery port 103 may flow through a space between the raw water case 111 and the filter unit 122, which will be described later, and may be collected in the storage space.

The water recovery port 103 is a hole formed on one side of the water intake container, and communicates between an external space and an internal space of the casing 110. Therefore, some of the fluid accommodated in the water intake container 102 is collected back in the storage space through the water recovery port 103. Thus, the water intake container 102 can accommodate a predetermined amount of fluid and suppress the overflow of purified water from the water intake container 102. Herein, the water recovery port 103 can be implemented in many different forms and is not limited to the embodiment shown in **FIG. 1****.** Also, a plurality of water recovery ports 103 may be formed in various directions of the water intake container 102.

Referring to **FIG. 2** and **FIG. 7****,** the casing 110 may include the raw water case 111.

Further, the raw water case 111 may form a storage space V1 for accommodating raw water. For example, a user may put raw water into the raw water case 111 and then mount the raw water case 111 in the water purifier 100 according to the present disclosure.

Furthermore, the casing 110 may further include a sub-case 112. The sub-case 112 may be coupled to a lower portion of the raw water case 111 and may further form therein an additional space V5. The sub-case 112 and the additional space V5 may form the water purifier 100 according to the present disclosure at a predetermined height or provide a space for accommodating some components of the water purifier 100 according to the present disclosure.

Referring to **FIG. 2****,** **FIG. 3** and **FIG. 7****,** the raw water case 111 may be equipped with a partition wall 104 formed to divide the inside into the storage space V1 and a control space V4. The partition wall 104 may divide an internal space of the raw water case 111 into the storage space V1 and the control space V4. For example, the raw water case 111 may divide the internal space into upper and lower parts through the partition wall 104, and the upper part divided through the partition wall 104 may be used as the storage space V1 and the lower part may be used as the control space V4. That is, the storage space V1 may be configured to accommodate fluid, and the control space V4 may be configured not to accommodate fluid.

Unlike a conventional water purification module configured as a single module in which a water purification filter and a pump driving unit are combined, the water purifier 100 according to the present disclosure includes the storage space V1 for purifying water and the control space V4 including a driving means or the like, which are divided through the partition wall 104.

Therefore, in the water purifier 100 according to the present disclosure, the filter unit 122 for purifying fluid and the pump driving unit including the stator 123 can be managed separately. For example, the rotor 121 and filter unit 122 disposed in the storage space V1 and the stator 123 disposed in the control space V4 may be managed separately.

Further, in the water purifier 100 according to the present disclosure, the filter unit 122 for purifying fluid and the pump driving unit including the stator 123 can be disassembled easily. Thus, the user can easily clean the water purifier 100 and can keep it clean even after long-term use.

The raw water case 111 may receive raw water and supply the raw water to the filtering unit 120. Referring to **FIG. 2****,** the raw water case 111 may have a cylindrical shape, and the upper portion of the raw water case 111 may be closed by the water intake container 102.

Referring to **FIG. 3** and **FIG. 4****,** the raw water case 111 may accommodate the rotor 121 and the stator 123. Referring to **FIG. 5A****,** the rotor 121 may include blades 121a configured to guide fluid, and may be rotatably disposed in the storage space V1 in which fluid flows inside the water purifier 100. For example, the fluid accommodated in the storage space V1 may be supplied to the filtering unit 120 to be described later as the rotor 121 rotates.

A hole into which a rotary pin 125 of a frame 124 can be inserted is formed at the center of the rotor 121, and a bushing or bearing may be coupled to an inner surface of the hole. Therefore, it is possible to suppress wear of the inner surface when the rotor 121 is driven to rotate. A rim 121b and a central portion 121c may be formed of magnets on a lower surface of the rotor 121. Herein, the magnet of the rim 121b forms a brushless direct current motor (BLDC) motor together with the stator 123 as will be described later. Further, the magnet of the central portion 121c is coupled to the rotary pin 125 so that the rotor 121 can rotate stably, and the rotor 121 is kept coupled to the frame 124 even when the frame 124 is disassembled.

Referring to **FIG. 5B****,** the stator 123 may be configured to drive the rotor 121. The stator 123 may be disposed in the control space isolated from the storage space inside the casing 110, and configured to transmit electromagnetic force to the rotor 121 and rotate the rotor 121. For example, the stator 123 may include a plurality of coils 123a in a periphery. The rotor 121 and the stator 123 according to an embodiment of the present disclosure may be configured as a BLDC motor.

Referring back to **FIG. 4****,** the partition wall 104 according to an embodiment of the present disclosure may include a base portion 104a, a rotor accommodation groove 104b, and a sidewall portion 104c. The rotor accommodation groove 104b may extend from the base portion 104a to accommodate the rotor 121, and the side wall portion 104c may extend from the base portion 104a to be supported by the casing 110.

The rotor 121 and the stator 123 according to an embodiment of the present disclosure may be located corresponding to each other with the partition wall 104 interposed therebetween. The rotor 121 may be disposed in the storage space V1, and the stator 123 may be disposed in the control space V4. As shown in **FIG. 4****,** the partition wall 104 includes the rotor accommodation groove 104b at an upper portion to accommodate the rotor 121 in the upper portion of the partition wall 104, and the stator (123) may be disposed at a lower portion of the partition wall 104.

In this way, the storage space V1 and the control space V4 are divided through the partition wall 104, and the rotor 121 may be located in the storage space V1 in which fluid flows or is stored to guide the flow of the fluid and a battery for supplying power to the water purifier 100 and the controller for controlling the operation speed and time of the rotor 121 may be located in the control space V4 in which fluid is not accommodated.

The casing 110 according to the present disclosure can improve the efficiency of each space by dividing the storage space V1 and the control space V4 through the partition wall 104. Further, the water purifier 100 can maintain the performance of the controller located in the control space V4 even when used for a long time. That is, since the control space V4 is divided from the storage space V1 and fluid does not flow into the control space V4, it is possible to maintain the performance of the controller of the water purifier 100. Furthermore, the storage space V1 is configured not to be exposed to various electronic components of the water purifier 100 according to the present disclosure. Thus, it is possible to eliminate the possibility of contamination and alleviate the user's anxiety about water quality.

Referring to **FIG. 2****,** the filtering unit 120 according to an embodiment of the present disclosure may be mounted in a central portion of the raw water case 111.

Referring to **FIG. 4** and **FIG. 6****,** the filtering unit 120 may include the frame 124. The frame 124 according to an embodiment of the present disclosure may include a main housing 124c, a rotor housing 124d, and a discharge housing 124e. Communication holes 124a and 124b may be formed in the main housing 124c. As shown in **FIG. 6****,** the first communication hole 124a formed in the main housing 124c communicates between an external space and an internal space of the frame 124, and the second communication hole 124b communicates between an internal space of the main housing 124c and an internal space of the rotor housing 124d.

The rotor housing 124d may be connected to the main housing 124c and may accommodate the rotor 121, and the discharge housing 124e may guide the fluid discharged from the rotor housing 124d to the filter unit 122. For example, the fluid accommodated in the storage space V1 may flow into the internal space of the frame 124 through the first communication hole 124a formed in the frame 124, and the fluid accommodated in the internal space may flow through the second communication hole 124b into the space in which the rotor 121 is disposed and the rotor 121 may guide the fluid to the filter unit 122.

The frame 124 may further include the rotary pin 125 rotatably coupled to the rotor 121. The rotary pin 125 is coupled to the rotor 121 so that the rotor 121 can be stably mounted in the frame 124. The rotary pin 125 is designed in a cylindrical shape. Thus, the rotary pin 125 can be inserted into a central portion of the rotor 121 and can also support the rotor 121 to be rotatable.

Referring to **FIG. 7****,** the frame 124 may support the filter unit 122 and form a pumping area V12 in the storage space. The pumping area V12 is a partial area within the storage space V1 and may be formed at a bottom portion of the storage space V1. Specifically, referring to **FIG. 4** and **FIG. 6****,** the pumping area V12 is a space formed by the rotor accommodation groove 104b and the rotor housing 124d. That is, the pumping area V12 is a space formed by the rotor 121 accommodated in the partition wall 104 and the frame 124, and as the rotor 121 rotates, the fluid accommodated in the storage space may be pumped and may flow into the filter unit 122.

Referring to **FIG. 4****,** the partition wall 104 may further include a frame accommodation groove 104d extending from the base portion 104a to accommodate the main housing 124c. For example, the frame accommodation groove 104d is formed into a shape corresponding to the main housing 124c of the frame 124 and formed at an upper portion of the partition wall 104. The partition wall 104 may stably accommodate the frame 124 through the frame accommodation groove 104d.

The frame accommodation groove 104d may be designed to have a greater perimeter than the rotor accommodation groove 104b. For example, referring to **FIG. 4****,** the partition wall 104 may accommodate the rotor 121 in the rotor accommodation groove 104b by using the rotary pin 125 and accommodate the frame 124 in the frame accommodation groove 104d. The frame 124 may be coupled to the rotor 121 by inserting the rotary pin 125 into a boss housing 124f. The frame 124 coupled to the rotor 121 may receive a rotating motion of the rotor 121 and guide the fluid accommodated in the storage space to the filter unit 122.

Referring back to **FIG. 3** and **FIG. 7****,** the filter unit 122 according to an embodiment of the present disclosure may include a filter body F, a filter accommodation unit 122a, and a cover unit 122b. The cover unit 122b may be detachably coupled to the filter accommodation unit 122a, and the filter accommodation unit 122a may be formed into a cylindrical shape to accommodate the filter body F. Fluid to be supplied may pass through the filter body F. For example, the filter body F may purify fluid that has moved to the filter unit 122 as the rotor rotates in the storage space.

The filter accommodation unit 122a and the cover unit 122b may form a filter space V2 of which one side communicates with the pumping area V12 and the other side communicates with a water intake space V3.

Specifically, referring to **FIG. 4****,** the filter unit 122 may further include an inlet tube 122c and an outlet tube 122d. The inlet tube 122c may extend from the filter accommodation unit 122a to communicate between the filter space V2 in which the filter body F is accommodated and the storage space V1. For example, the inlet tube 122c may be formed under the filter unit 122 at a position corresponding to the discharge housing 124e of the frame 124. The inlet tube 122c may guide, to the filter unit 122, the fluid discharged to the discharge housing 124e through the communication holes 124a and 124b of the frame 124 as the rotor 121 rotates.

The outlet tube 122d may extend from the cover unit 122b to be connected to the water intake port 101. For example, when the water intake container 102 is mounted at an upper portion of the water purifier 100, the outlet tube 122d may be located to be inserted into the water intake port 101.

The outlet tube 122d extending upwards toward the water intake port 101 from the cover unit 122b may be accommodated in the filter body F and may discharge the purified fluid to the outside through the water intake port 101 as the rotor 121 rotates.

Referring to the flow of the fluid accommodated in the water purifier 100 illustrated in **FIG. 7****,** the fluid supplied into the water purifier 100 will be accommodated and stored in the storage space V1 for accommodating the raw water formed by the raw water case 111.

The fluid in the storage space V1 may be supplied into the filter space V2 via the pumping area V12. Specifically, the fluid accommodated in the storage space V1 may be accommodated in the pumping area V12 as the rotor 121 rotates. The fluid flowing into the pumping area V12 as the rotor 121 rotates may be guided by the frame 124 to the filter space V2 formed in the filter unit 122 via the inlet tube 122c.

The fluid purified through the filter space V2 may be discharged to and accommodated in the water intake space V3 formed by the water intake container 102. Specifically, the fluid accommodated in the filter space V2 may be filtered and then discharged to the water intake space V3 through the water intake port 101 along the outlet tube 122d. At least some of the fluid in the water intake space V3 may be collected in the storage space V1. Since the water intake space V3 can accommodate only a predetermined amount of fluid, some of the fluid accommodated in the water intake space V3 may be accommodated again in the storage space V1 through the water recovery port 103.

The fluid accommodated in the storage space V1 may flow again into the filtering unit 120 as the rotor 121 rotate and undergo a purification process, and then may be discharged to the water intake space V3.

Accordingly, the fluid supplied into the water purifier 100 may be discharged to the water intake space V3 via the storage space V1, the pumping area V12, and the filter space V2. The fluid cannot move to the control space V4 in which the controller for supplying power to the water purifier 100 and controlling the operation, speed, and time of the rotor 121 is provided.

As described above, in the water purifier 100 according to an embodiment of the present disclosure, the filter space V2 for purifying fluid is distinctly divided from the control space V4 for controlling the storage space V1. Thus, the spaces can be managed individually according to functions and uses, respectively.

Further, the control space V4, the storage space V1, and the water intake space V3 are formed from bottom to top. Thus, the spaces and components with a higher frequency of maintenance and management, such as cleaning or part replacement, are sequentially arranged on the upper side. Therefore, it is intuitive and easy for the user to use, maintain and manage. Furthermore, the filter body F may be periodically replaced or washed by separating the filter unit 122 disposed in the central portion of the raw water case 111. Moreover, the frame 124 and the rotor 121 disposed under the filter unit 122 may be separated and washed according to the cycle of management. Also, the raw water case 111 and the partition wall 104 may be separated when periodic check or repair is required.

Meanwhile, a driving unit for a water purifier is disposed inside the water purifier 100 according to an embodiment of the present disclosure and configured to form the flow of the fluid supplied to the filter unit 122 that purifies and discharges fluid. The driving unit may include the rotor 121 and the stator 123. The rotor 121 may include the blades 121a configured to guide fluid, and may be rotatably disposed in the storage space in which fluid flows inside the water purifier 100. The stator 123 may be disposed in the control space isolated from the storage space inside the water purifier 100, and configured to transmit electromagnetic force to the rotor 121 and rotate the rotor 121.

The above description of the present disclosure is provided for the purpose of illustration, and it would be understood by a person with ordinary skill in the art to which the present invention belongs that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner, likewise, components described to be distributed can be implemented in a combined manner.

The scope of the present disclosure is defined by the following claims rather than by the detailed description of the embodiment, and it should be understood that all modifications and embodiments conceived from the meaning and scope of the claims and their equivalents are included in the scope of the present disclosure.

## Claims

1. A water purifier, comprising:
a casing including a water intake port; and
a filtering unit disposed inside the casing,
wherein the filtering unit includes,
a rotor including blades configured to guide fluid and rotatably disposed in a storage space in which raw water is accommodated inside the casing;
a filter unit communicating with the storage space and configured to purify fluid supplied from the rotor and discharge the fluid toward the water intake port; and
a stator disposed in a control space isolated from the storage space inside the casing and configured to transmit electromagnetic force to the rotor and rotate the rotor.

2. The water purifier of Claim 1,
wherein the casing further includes,
a water intake container configured to accommodate fluid discharged from the water intake port while exposing the fluid upwards; and
a water recovery port formed in the water intake container to collect fluid in the storage space.

3. The water purifier of Claim 1,
wherein the casing includes,
a raw water case that forms the storage space and accommodates the rotor and the stator, and
the raw water case is equipped with a partition wall formed to divide the inside of the raw water case into the storage space and the control space.

4. The water purifier of Claim 3,
wherein the partition wall includes,
a base portion;
a rotor accommodation groove extending from the base portion to accommodate the rotor; and
a sidewall portion extending from the base portion to be supported by the casing.

5. The water purifier of Claim 1,
wherein the filtering unit includes a frame equipped with a main housing forming communication holes, a rotor housing that is connected to the main housing and accommodates the rotor, and a discharge housing for guiding fluid discharged from the rotor housing to the filter unit.

6. The water purifier of Claim 5,
wherein the frame includes a rotary pin rotatably coupled to the rotor.

7. The water purifier of Claim 3,
wherein the filtering unit further includes a frame equipped with a main housing forming communication holes, and
the partition wall includes,
a base portion;
a sidewall portion extending from the base portion to be supported by the casing; and
a frame accommodation groove extending from the base portion to accommodate the main housing.

8. The water purifier of Claim 1,
wherein the filter unit includes,
a filter body through which fluid to be supplied passes;
a filter accommodation unit formed to accommodate the filter body; and
a cover unit detachably coupled to the filter accommodation unit.

9. The water purifier of Claim 8,
wherein the filter unit further includes,
an inlet tube extending from the filter accommodation unit to communicate between a space in which the filter body is accommodated and the storage space; and
an outlet tube extending from the cover unit to be connected to the water intake port.

10. A driving unit for a water purifier disposed inside the water purifier and configured to form the flow of fluid supplied to a filter unit that purifies and discharges fluid, comprising:
a rotor including blades configured to guide fluid and rotatably disposed in a storage space in which the fluid flows inside the water purifier; and
a stator disposed in a control space isolated from the storage space inside the water purifier and configured to transmit electromagnetic force to the rotor and rotate the rotor.
